# EUROPÄISCHE PATENTSCHRIFT

(11) **EP 4 196 330 B1**
(45) Veröffentlichungstag und Bekanntmachung des Hinweises auf die Patenterteilung: **22.05.2024**
(21) Anmeldenummer: 21749657.9
(22) Anmeldetag: 02.08.2021
(51) Int. Cl.: B29C 43/18, B29C 33/00, B29C 43/36, B29L 31/34, B29K 105/08, B29C 33/14

(54) **FLIESSPRESSTEIL, BATTERIEGEHÄUSE MIT EINEM FLIESSPRESSTEIL, VERFAHREN ZUM HERSTELLEN EINES FLIESSPRESSTEILS, FLIESSPRESSWERKZEUG**
EXTRUDED PART, BATTERY HOUSING HAVING AN EXTRUDED PART, METHOD FOR PRODUCING AN EXTRUDED PART, EXTRUSION DIE
PIÈCE EXTRUDÉE, BOÎTIER DE BATTERIE AYANT UNE PIÈCE EXTRUDÉE, PROCÉDÉ DE PRODUCTION D'UNE PIÈCE EXTRUDÉE, FILIÈRE D'EXTRUSION

(30) Priorität: 11.08.2020 DE 102020121141
(43) Veröffentlichungstag der Anmeldung: 21.06.2023
(73) Patentinhaber: Kautex Textron GmbH & Co. KG, 53229 Bonn (DE); Weber Fibertech GmbH, 88677 Markdorf (DE)
(72) Erfinder: WOLF, Hartmut, 53639 Königswinter (DE); STÖTZNER, Norbert, 88677 Markdorf (DE)
(74) Vertreter: Richly & Ritschel Patentanwälte PartG mbB
(86) Internationale Anmeldenummer: PCT/EP2021/071591
(87) Internationale Veröffentlichungsnummer: WO 2022/033914

(56) Entgegenhaltungen:
- CN-A- 105 773 895
- DE-A1-102006 048 291
- JP-A- 2000 167 863
- US-A- 2 239 248
- US-A1- 2020 198 193

## Beschreibung

Die vorliegende Erfindung betrifft ein Fließpressteil und ein Batteriegehäuse mit einem Fließpressteil für eine Traktionsbatterie eines Kraftfahrzeugs. Ferner betrifft die vorliegende Erfindung ein Verfahren zum Herstellen eines Fließpressteils mittels eines Fließpresswerkzeugs. Schlussendlich betrifft die vorliegende Erfindung ein Fließpresswerkzeug zum Herstellen eines Fließpressteils.

Fließpressteile, so wie beispielsweise aus Kunststoff gebildete Batteriegehäuseschalen, die Durchbrüche in Form von Durchgangsbohrungen aufweisen, sind mit herkömmlichen Fließpresswerkzeugen zwar durchaus werkzeugfallend (d.h. ohne dem Fließpressen nachgelagerte Herstellungsschritte) herstellbar, jedoch weisen entsprechend hergestellte Fließpressteile im Bereich der Durchgangsöffnungen eine verminderte Stabilität auf. Der Grund hierfür ist, dass bei dem Herstellungsprozess mittels Fließpressen beim Umströmen eines Kerns des Fließpresswerkzeugs eine Schmelzefront eines Plastifikats an dem Kern so verformt wird, dass in Fließrichtung des Plastifikats (bzw. der Schmelzfront des Plastifikats) dem Kern abgewandt zwei Schmelzefronten (gebildet durch Umfließen des Kerns von der einen Schmelzefront des Plastifikats) aufeinandertreffen und miteinander verschweißen. Dabei ist eine linienförmige Bindenaht, die durch die zwei miteinander verbundenen Schmelzefronten definiert wird, geschwächt. Denn die zwei Schmelzefronten sind zum Zeitpunkt des Aufeinandertreffens bereits zum Teil abgekühlt, so dass die Verbindungsstärke der Bindenaht vermindert ist.

Bei Fließpressteilen, die durch Fließpressen eines mit Fasermaterial (z.B. Glasfasern oder Kohlefasern) versetztem Plastifikats erzeugt werden, besteht das weitere Problem, dass sich die Fasern während des Fließpressens des Plastifikats im Bereich der Schmelzefronten größtenteils derart ausrichten, dass die Längserstreckungen der Fasern parallel zu den Schmelzefronten und somit auch parallel zur Bindenaht des Fließpressteils orientiert sind. Folglich tragen die Fasern nicht zu einer Stabilisierung des Fließpressteils im Bereich von dessen Durchgangsöffnungen bei. Insbesondere tragen die Fasern nicht zu einer Stabilisierung der Bindenaht des Fließpressteils bei.

Folglich werden bei aus dem Stand der Technik bekannten Herstellungsverfahren die Durchgangsöffnungen in Fließpressteile dem Fließpressprozess zeitlich nachgelagert in das Fließpressteil eingebracht. Hierbei können die Durchgangsöffnungen in das Fließpressteil gestanzt, gebohrt oder spananhebend in das Fließpressteil eingebracht werden. Die entsprechende Fertigung des Fließpressteils ist folglich aufwendig und somit kostenintensiv. Ferner wird das zu fertigende Bauteil bei der Einbringung der Durchgangsöffnungen einer erheblichen Verschmutzung ausgesetzt, die nur mit großem Aufwand vollständig von dem zu fertigenden Bauteil entfernt werden kann.

Großflächige Fließpressteile müssen aus mehreren Plastifikaten gebildet werden, da die Schmelzefronten während des Fließpressvorganges nur über einen begrenzten Verformungsweg schmelzplastisch bleiben. Entlang einer Kontaktlinie von Schmelzefronten der jeweiligen Plastifikate - also entlang einer Bindenaht des zu fertigenden Fließpressteils - weisen die so gebildeten Fließpressteile eine verminderte Stabilität auf. Denn die Bindenaht des Fließpressteils ist aus den oben beschriebenen Gründen auch für aus mehreren Plastifikaten gebildete Fließpressteile geschwächt.

US 2 239 248 A offenbart ein Fließpressteil gemäß dem Oberbegriff des Anspruchs 1.

CN 105 773 895 A offenbart ein Fließpresswerkzeug gemäß dem Oberbegriff des Anspruchs 11.

Der vorliegenden Erfindung liegt die Aufgabe zugrunde, ein Fließpressteil mit einer erhöhten Stabilität bereitzustellen.

Diese der vorliegenden Erfindung zugrundeliegende Aufgabe wird durch ein Fließpressteil mit den Merkmalen des Anspruchs 1 gelöst. Vorteilhafte Ausgestaltungen des Fließpressteils sind in den von Anspruch 1 abhängigen Ansprüchen beschrieben.

Im Genaueren wird die der vorliegenden Erfindung zugrundeliegende Aufgabe durch ein Fließpressteil für eine Traktionsbatterie gelöst, wobei das Fließpressteil durch Fließpressen von zumindest einem Plastifikat gebildet ist, wobei das Plastifikat / die Plastifikate zwei Schmelzefronten aufweist / aufweisen, die im erstarrten Zustand des Plastifikats / der Plastifikate zwei Materialinnenkanten des Fließpressteils bilden. Dabei sind die zwei Materialinnenkanten miteinander stoffschlüssig verbunden und definieren eine linienförmige Bindenaht des Fließpressteils, wobei die Bindenaht in einem Verbindungsbereich des Fließpressteils angeordnet ist. Das erfindungsgemäße Fließpressteil weist zumindest ein Fasergitter auf, das im Verbindungsbereich des Fließpressteils angeordnet und mit dem Fließpressteil derart verbunden ist, dass das Fasergitter die zwei Materialinnenkanten überbrückt.

Vorzugsweise ist das Fließpressteil als Batteriegehäuseschale für ein Batteriegehäuse einer Traktionsbatterie für ein Kraftfahrzeug ausgebildet.

Das erfindungsgemäße Fließpressteil weist eine erhöhte Stabilität insbesondere in dessen Verbindungsbereich auf. Denn durch die Bereitstellung des Fasergitters im Verbindungsbereich des Fließpressteils werden die zwei Materialinnenkanten des Fließpressteils überbrückt. Durch gezielte Platzierung des Fasergitters in dem Fließpresswerkzeug kann gezielt auf die Orientierung der Fasern des Fasergitters in dem Fließpresswerkzeug Einfluss genommen werden, so dass Fasern des Fließpressteils die zwei Materialinnenkanten überbrücken. Hierzu weisen die Fasern des Fasergitters Längserstreckungen auf, die zumindest teilweise senkrecht zur Bindenaht des Fließpressteils orientiert sind.

Somit wird die Stabilität von Fließpressteilen, die Durchgangsöffnungen aufweisen, im Bereich der Durchgangsöffnungen erhöht. Auch wird die Stabilität von Fließpressteilen erhöht, die aus zumindest zwei Plastifikaten hergestellt werden.

Das Fasergitter ist ein separates Bauteil, das beim Herstellungsprozess des Fließpressteils mit dem Plastifikat verbunden wird, wobei die Verbindung form- und/oder stoffschlüssig sein kein. Das Fasergitter kann auch als Fasergittermatte oder als Fasergittereinsatz bezeichnet werden.

Der Verbindungsbereich des Fließpressteils ist der den Materialinnenkanten benachbarte Bereich des Fließpressteils. Weiterhin gehören sowohl eine Innenfläche als auch eine Außenfläche des Fließpressteils, die jeweils benachbart zu den miteinander stoffschlüssig verbundenen Materialinnenkanten sind, zu dem Verbindungsbereich des Fließpressteils.

Die linienförmige Bindenaht kann geradlinige Abschnitte und gekrümmte Abschnitte aufweisen.

Die Fasern des Fasergitters sind vorzugsweise als Glasfasern und/oder als Karbonfasern ausgebildet.

Das Plastifikat bzw. die Plastifikate weisen vorzugsweise Polyamid und/oder Polypropylen und/oder Polycarbonate und/oder Polyethylen oder eine Mischung dieser Kunststoffe auf. Weiter vorzugweise bestehen das Plastifikat bzw. die Plastifikate aus Polyamid und/oder Polypropylen und/oder Polycarbonate und/oder Polyethylen oder eine Mischung dieser Kunststoffe.

Das Plastifikat bzw. die Plastifikate weisen vorzugsweise ein Fasermaterial auf, das in einem Matrixmaterial (Polyamid und/oder Polypropylen und/oder Polycarbonate und/oder Polyethylen oder eine Mischung dieser Kunststoffe) aufgenommen ist. Das Fasermaterial des Plastifikats bzw. der Plastifikate weist vorzugsweise Glasfasern und/oder Karbonfasern auf.

Beispielsweise ist das Fließpressteil durch Fließpressen eines Plastifikat gebildet, wobei das Plastifikat zwei Schmelzefronten aufweist, die im erstarrten Zustand des Plastifikats zwei Materialinnenkanten des Fließpressteils bilden, wobei die zwei Schmelzefronten durch Umfließen eines Werkzeugkerns gebildet sind. Dabei sind die zwei Materialinnenkanten miteinander stoffschlüssig verbunden und definieren eine linienförmige Bindenaht des Fließpressteils, wobei die Bindenaht in einem Verbindungsbereich des Fließpressteils angeordnet ist. Das Fließpressteil weist zumindest ein Fasergitter auf, das im Verbindungsbereich des Fließpressteils angeordnet und mit dem Fließpressteil derart verbunden ist, dass das Fasergitter die zwei Materialinnenkanten überbrückt.

Weiter beispielsweise ist das Fließpressteil durch Fließpressen von zwei Plastifikaten gebildet, wobei ein erstes Plastifikat eine erste Schmelzfront und ein zweites Plastifikat eine zweite Schmelzfront aufweist, die im erstarrten Zustand der Plastifikate zwei Materialinnenkanten des Fließpressteils bilden. Dabei sind die zwei Materialinnenkanten miteinander stoffschlüssig verbunden und definieren eine linienförmige Bindenaht des Fließpressteils, wobei die Bindenaht in einem Verbindungsbereich des Fließpressteils angeordnet ist. Das Fließpressteil weist zumindest ein Fasergitter auf, das im Verbindungsbereich des Fließpressteils angeordnet und mit dem Fließpressteil derart verbunden ist, dass das Fasergitter die zwei Materialinnenkanten überbrückt.

Die stoffschlüssige Verbindung der zumindest zwei Materialinnenkanten ist vorzugsweise durch eine Verschweißung der zumindest zwei Materialinnenkanten realisiert.

Vorzugsweise ist das Fließpressteil derart ausgebildet, dass zumindest 50% der Fasern des Fasergitters eine Längserstreckung aufweisen, die quer zur Bindenaht verläuft und mit der Bindenaht einen Winkel zwischen 45° und 90° einschließt.

Durch eine entsprechende Ausbildung des Fließpressteils wird die Stabilität des Fließpressteils nochmals vergrößert.

Ein von der Bindenaht und einer Längserstreckung einer Faser eingeschlossener Winkel von 90° ist im Sinne der vorliegenden Erfindung so zu verstehen, dass die Längserstreckung der Faser senkrecht zur Bindenaht des Fließpressteils verläuft.

Vorzugsweise weisen zwischen 50% und 90% der Fasern des Fasergitters eine Längserstreckung auf, die mit der Bindenaht einen Winkel zwischen 45° und 90° einschließen. Mit einem entsprechend ausgebildeten Fasergitter konnte eine gute Stabilisierung des Fließpressteils im Verbindungsbereich erzielt werden.

Weiter vorzugsweise weisen zwischen 50% und 90% der Fasern des Fasergitters eine Längserstreckung auf, die mit der Bindenaht einen Winkel zwischen 60° und 90° einschließen. Mit einem entsprechend ausgebildeten Fasergitter konnte eine nochmals verbesserte Stabilisierung des Fließpressteils im Verbindungsbereich erzielt werden.

Nochmals weiter vorzugsweise weisen zwischen 70% und 90% der Fasern des Fasergitters eine Längserstreckung auf, die mit der Bindenaht einen Winkel zwischen 60° und 90° einschließen. Mit einem entsprechend ausgebildeten Fasergitter konnte eine nochmals verbesserte Stabilisierung des Fließpressteils im Verbindungsbereich erzielt werden.

Nochmals weiter vorzugsweise weisen zwischen 70% und 90% der Fasern des Fasergitters eine Längserstreckung auf, die mit der Bindenaht einen Winkel zwischen 75° und 90° einschließen. Mit einem entsprechend ausgebildeten Fasergitter konnte eine nochmals verbesserte Stabilisierung des Fließpressteils im Verbindungsbereich erzielt werden.

Nochmals weiter vorzugsweise weisen zwischen 70% und 90% der Fasern des Fasergitters eine Längserstreckung auf, die mit der Bindenaht einen Winkel zwischen 85° und 90° einschließen. Mit einem entsprechend ausgebildeten Fasergitter konnte eine nochmals verbesserte Stabilisierung des Fließpressteils im Verbindungsbereich erzielt werden.

Nochmals weiter vorzugsweise weisen 80% der Fasern des Fasergitters eine Längserstreckung auf, die mit der Bindenaht einen Winkel von im Wesentlichen 90° einschließen. Mit einem entsprechend ausgebildeten Fasergitter konnte eine nochmals verbesserte Stabilisierung des Fließpressteils im Verbindungsbereich erzielt werden.

Vorzugsweise ist das Fließpressteil derart ausgebildet, dass das zumindest eine Fasergitter an einer Innenfläche des Fließpressteils grenzt.

Das entsprechend ausgebildete Fließpressteil weist eine erhöhte Biegestabilität auf. Insbesondere bei als eine Gehäuseschale ausgebildeten Fließpressteils weist die entsprechend ausgebildete Gehäuseschale eine erhöhte Stabilität bei einer Innenüberdruck bedingten Biegung der Gehäuseschale auf.

Das Merkmal, gemäß dem das Fasergitter an einer Innenfläche des Fließpressteils grenzt, ist so zu verstehen, dass das Fasergitter von dem Material des Fließpressteils umschlossen und/oder durchsetzt ist, wobei eine Außenfläche des Fasergitters mit der Innenfläche des Fließpressteils zusammenfällt oder dieser gegenüberliegend angeordnet ist.

Vorzugsweise ist das Fließpressteil derart ausgebildet, dass das zumindest eine Fasergitter an einer Außenfläche des Fließpressteils grenzt.

Das entsprechend ausgebildete Fließpressteil weist eine erhöhte Biegestabilität auf. Insbesondere bei als eine Gehäuseschale ausgebildeten Fließpressteils weist die entsprechend ausgebildete Gehäuseschale eine erhöhte Stabilität bei einer Innenunterdruck bedingten Biegung der Gehäuseschale auf.

Das Merkmal, gemäß dem das Fasergitter an einer Außenfläche des Fließpressteils grenzt, ist so zu verstehen, dass das Fasergitter von dem Material des Fließpressteils umschlossen und/oder durchsetzt ist, wobei eine Außenfläche des Fasergitters mit der Außenfläche des Fließpressteils zusammenfällt oder dieser gegenüberliegend angeordnet ist.

Vorzugsweise ist Fließpressteil derart ausgebildet, dass das Fasergitter in einem Matrixmaterial eingebettet ist, wobei das Matrixmaterial mit dem Plastifikat / den Plastifikaten stoffschlüssig verbunden ist.

Das entsprechend ausgebildete Fließpressteil weist eine nochmals vergrößerte Stabilität auf. Denn durch die Einbettung des Fasermaterials in dem Matrixmaterial können bei dem auch als Organoblech bezeichneten Bauteil die Kräfte verbessert von dem Fließpressteil auf dessen Fasern übertragen werden. Bei dem entsprechend ausgebildeten Fließpressteil wird eine verbesserte Durchdringung des Fasergitters mit Kunststoffmaterial erreicht, so dass die Stabilität des Fließpressteils erhöht ist.

Vorzugsweise weist das Matrixmaterial Polyamid und/oder Polypropylen und/oder Polycarbonate und/oder Polyethylen oder eine Mischung dieser Kunststoffe auf. Weiter vorzugweise besteht das Matrixmaterial aus Polyamid und/oder Polypropylen und/oder Polycarbonate und/oder Polyethylen oder eine Mischung dieser Kunststoffe.

Eine weitere der vorliegenden Erfindung zugrundeliegende Aufgabe ist die Bereitstellung eines Batteriegehäuses, das eine vergrößerte Stabilität und verminderte Herstellungskosten aufweist.

Diese der vorliegenden Erfindung zugrundeliegende Aufgabe wird durch ein Batteriegehäuse mit den Merkmalen des Anspruchs 6 gelöst. Im Genaueren wird diese der vorliegenden Erfindung zugrundeliegende Aufgabe durch ein Batteriegehäuse für eine Traktionsbatterie gelöst, wobei das Batteriegehäuse zumindest ein wie weiter oben dieser Beschreibung beschriebenes Fließpressteil aufweist.

Das Fließpressteil ist dabei vorzugsweise als Batteriegehäuseschale ausgebildet, die wiederum als Batteriegehäuseoberschale oder als Batteriegehäuseunterschale ausgebildet ist. Nochmals weiter vorzugsweise weist das Batteriegehäuse ein als Batteriegehäuseoberschale ausgebildetes erstes Fließpressteil und ein als Batteriegehäuseunterschale ausgebildetes zweites Fließpressteil auf.

Eine weitere der vorliegenden Erfindung zugrundeliegende Aufgabe ist die Bereitstellung einer Traktionsbatterie, die eine vergrößerte Stabilität und verminderte Herstellungskosten aufweist.

Diese der vorliegenden Erfindung zugrundeliegende Aufgabe wird durch eine Traktionsbatterie mit den Merkmalen des Anspruchs 7 gelöst. Im Genaueren wird diese der vorliegenden Erfindung zugrundeliegende Aufgabe durch eine Traktionsbatterie für ein Kraftfahrzeug gelöst, wobei die Traktionsbatterie ein wie weiter oben dieser Beschreibung beschriebenes Batteriegehäuse aufweist, wobei zumindest ein Batteriemodul im Innenraum des Batteriegehäuses aufgenommen ist.

Eine weitere der vorliegenden Erfindung zugrundeliegende Aufgabe ist die Bereitstellung eines Verfahrens zum Herstellen eines Fließpressteils mittels eines Fließpresswerkzeugs, wobei das Verfahren eine kostengünstigere Herstellung eines Fließpressteils mit vergrößerter Stabilität ermöglicht.

Diese der vorliegenden Aufgabe zugrundeliegende Aufgabe wird durch ein Verfahren zum Herstellen eines Fließpressteils mit den Merkmalen des Anspruchs 8 gelöst. Vorteilhafte Ausgestaltungen sind in den von Anspruch 8 abhängigen Ansprüchen beschrieben.

Im Genaueren wird diese der vorliegenden Erfindung zugrundeliegende Aufgabe durch ein Verfahren zum Herstellen eines Fließpressteils mittels eines Fließpresswerkzeugs gelöst, wobei das Verfahren die folgenden Verfahrensschritte aufweist:
- Platzieren von zumindest einem Plastifikat in einer Matrize des sich in Offenstellung befindlichen Fließpresswerkzeugs;
- Platzieren eines Fasergitters in dem Fließpresswerkzeug;
- Schließen des Fließpresswerkzeugs, so dass ein Stempel des Fließpresswerkzeugs mit dem zumindest einen Plastifikat in Kontakt kommt und das Plastifikat durch Druckaufbringung mittels des Stempels umgeformt wird und das Fasergitter von zwei Schmelzefronten des zumindest einen Plastifikats von zwei Seiten eingefasst und mit dem Plastifikat verbunden wird.

Das erfindungsgemäße Verfahren weist den Vorteil auf, dass ein Fließpressteil mit erhöhter Stabilität insbesondere in dessen Verbindungsbereich herstellbar ist, wobei die Herstellungskosten aufgrund der werkzeugfallenden Herstellung des Fließpressteils erheblich vermindert sind. Denn durch die Bereitstellung des Fasergitters im Verbindungsbereich des Fließpressteils werden die zwei Materialinnenkanten des Fließpressteils überbrückt. Durch gezielte Platzierung des Fasergitters in dem Fließpresswerkzeug kann gezielt auf die Orientierung der Fasern des Fasergitters in dem Fließpresswerkzeug Einfluss genommen werden, so dass Fasern des Fließpressteils die zwei Materialinnenkanten überbrücken. Hierzu weisen die Fasern des Fasergitters Längserstreckungen auf, die zumindest teilweise senkrecht zur Bindenaht des Fließpressteils orientiert sind.

Somit wird die Stabilität von Fließpressteilen, die Durchgangsöffnungen aufweisen, im Bereich der Durchgangsöffnungen erhöht. Auch wird die Stabilität von Fließpressteilen erhöht, die aus zumindest zwei Plastifikaten hergestellt werden.

Das Fließpressteil ist dabei vorzugsweise als Batteriegehäuseschale ausgebildet, die wiederum als Batteriegehäuseoberschale oder als Batteriegehäuseunterschale ausgebildet ist.

Vorzugsweise wird das Fasergitter derart orientiert in dem Fließpresswerkzeug platziert, dass zumindest 50% der Fasern des Fasergitters eine Längserstreckung aufweisen, die quer zur einer zu erzeugenden Bindenaht des Fließpressteils verlaufen und mit der Bindenaht einen Winkel zwischen 45° und 90° einschließen.

Vorzugsweise wird das Fasergitter derart orientiert in dem Fließpresswerkzeug platziert, dass zwischen 50% und 90% der Fasern des Fasergitters eine Längserstreckung aufweisen, die mit der zu erzeugenden Bindenaht des zu Fließpressteils einen Winkel zwischen 45° und 90° einschließen.

Vorzugsweise wird das Fasergitter derart orientiert in dem Fließpresswerkzeug platziert, dass zwischen 50% und 90% der Fasern des Fasergitters eine Längserstreckung aufweisen, die mit der zu erzeugenden Bindenaht des zu Fließpressteils einen Winkel zwischen 60° und 90° einschließen.

Nochmals weiter vorzugsweise wird das Fasergitter derart orientiert in dem Fließpresswerkzeug platziert, dass zwischen 70% und 90% der Fasern des Fasergitters eine Längserstreckung aufweisen, die mit der zu erzeugenden Bindenaht des zu Fließpressteils einen Winkel zwischen 60° und 90° einschließen.

Nochmals weiter vorzugsweise wird das Fasergitter derart orientiert in dem Fließpresswerkzeug platziert, dass zwischen 70% und 90% der Fasern des Fasergitters eine Längserstreckung aufweisen, die mit der zu erzeugenden Bindenaht des zu Fließpressteils einen Winkel zwischen 75° und 90° einschließen.

Nochmals weiter vorzugsweise wird das Fasergitter derart orientiert in dem Fließpresswerkzeug platziert, dass zwischen 70% und 90% der Fasern des Fasergitters eine Längserstreckung aufweisen, die mit der zu erzeugenden Bindenaht des zu Fließpressteils einen Winkel zwischen 85° und 90° einschließen.

Nochmals weiter vorzugsweise wird das Fasergitter derart orientiert in dem Fließpresswerkzeug platziert, dass 80% der Fasern des Fasergitters eine Längserstreckung aufweisen, die mit der zu erzeugenden Bindenaht des zu Fließpressteils einen Winkel von im Wesentlichen 90° einschließen.

Vorzugsweise ist das Verfahren derart ausgebildet, dass das Fasergitter derart in dem Fließpresswerkzeug platziert ist, dass das Fasergitter in unmittelbarer Nachbarschaft eines Kerns der Matrize angeordnet ist, so dass der Kern zwischen dem Plastifikat und dem Fasergitter angeordnet ist.

Durch das entsprechend ausgebildete Verfahren wird erreicht, dass das zumindest eine Durchgangsöffnung aufweisende Fließpressbauteil insbesondere im Bereich der Durchgangsöffnung eine vergrößerte Stabilität aufweist. Denn das Fasergitter führt im Bereich der zu erzeugenden Bindenaht, die sich der Durchgangsöffnung anschließt, zu einer Stabilisierung des Fließpressbauteils.

Das Merkmal, gemäß dem der Kern zwischen dem Plastifikat und dem Fasergitter angeordnet ist, hat zur Folge, dass das Fasergitter hinsichtlich einer Flußrichtung des Plastifikats / der Plastifikate bzw. der Schmelzfronten des Plastifikats / der Plastifikate flußabwärts des Kerns angeordnet ist.

Vorzugsweise wird mittels des Verfahrens das Fasergitter an einer Innenfläche des Fließpressbauteils positioniert. Weiter vorzugsweise wird mittels des Verfahrens das Fasergitter an einer Außenfläche des Fließpressbauteils positioniert. Nochmals weiter vorzugsweise wird mittels des Verfahrens ein Fasergitter an einer Außenfläche des Fließpressbauteils und ein weiteres Fasergitter an einer Innenfläche des Fließpressbauteils positioniert.

Weiter vorzugsweise ist das Verfahren derart ausgebildet, dass zumindest zwei Plastifikate in der Matrize des sich in Offenstellung befindlichen Fließpresswerkzeugs und ein Fasergitter zwischen den zwei Plastifikaten platziert werden. Anschließend wird das Fließpresswerkzeug geschlossen, so dass der Stempel des Fließpresswerkzeugs mit den zwei Plastifikaten in Kontakt kommt und die Plastifikate durch Druckaufbringung mittels des Stempels umgeformt werden und das Fasergitter von einer ersten Schmelzefront des ersten Plastifikats und einer zweiten Schmelzefront des zweiten Plastifikats eingefasst und mit den Plastifikaten verbunden wird.

Durch das entsprechend ausgebildete Verfahren können großflächige Fließpressteile hergestellt werden, zu deren Herstellung mehr als ein Plastifikat notwendig ist, wobei auch diese großflächigen Fließpressteile eine erhöhte Stabilität insbesondere im Bereich der Bindenähte des Fließpressteils aufweisen.

Eine weitere der vorliegenden Erfindung zugrundeliegende Aufgabe ist die Bereitstellung eines Fließpresswerkzeugs zum Herstellen eines Fließpressteils, wobei das Fließpresswerkzeug eine kostengünstigere Herstellung eines Fließpressteils mit vergrößerter Stabilität ermöglicht.

Diese der vorliegenden Aufgabe zugrundeliegende Aufgabe wird durch ein Fließpresswerkzeug zum Herstellen eines Fließpressteils mit den Merkmalen des Anspruchs 11 gelöst. Eine vorteilhafte Ausgestaltungen ist im abhängigen Anspruch 12 beschrieben.

Im Genaueren wird diese der vorliegenden Erfindung zugrundeliegende Aufgabe durch ein Fließpresswerkzeug zum Herstellen eines Fließpressteils für eine Traktionsbatterie und/oder für ein Gehäuse einer Traktionsbatterie gelöst, wobei das Fließpresswerkzeug eine Matrize und einen Stempel aufweist, wobei die Matrize des Fließpresswerkzeugs eine Aufnahmeeinrichtung zum Aufnehmen eines Fasergitters aufweist.

Das erfindungsgemäße Fließpresswerkzeug weist den Vorteil auf, dass ein Fließpressteil mit erhöhter Stabilität insbesondere in dessen Verbindungsbereich herstellbar ist, wobei die Herstellungskosten aufgrund der werkzeugfallenden Herstellung des Fließpressteils erheblich vermindert sind. Denn durch die Bereitstellung des Fasergitters im Verbindungsbereich des Fließpressteils werden zwei Materialinnenkanten des Fließpressteils überbrückt. Durch gezielte Platzierung des Fasergitters in dem Fließpresswerkzeug kann gezielt auf die Orientierung der Fasern des Fasergitters in dem Fließpresswerkzeug Einfluss genommen werden, so dass Fasern des Fließpressteils die zwei Materialinnenkanten überbrücken. Hierzu weisen die Fasern des Fasergitters Längserstreckungen auf, die zumindest teilweise senkrecht zur Bindenaht des Fließpressteils orientiert sind.

Somit wird die Stabilität von Fließpressteilen, die Durchgangsöffnungen aufweisen, im Bereich der Durchgangsöffnungen erhöht. Auch wird die Stabilität von Fließpressteilen erhöht, die aus zumindest zwei Plastifikaten hergestellt werden.

Das Fließpressteil ist dabei vorzugsweise als Batteriegehäuseschale ausgebildet, die wiederum als Batteriegehäuseoberschale oder als Batteriegehäuseunterschale ausgebildet ist.

Vorzugsweise ist das Fließpresswerkzeug derart ausgebildet, dass die Aufnahmeeinrichtung als Vertiefung in der Matrize ausgebildet ist.

Das entsprechend ausgebildete Fließpresswerkzeug ermöglicht eine besonders einfache Fixierung bzw. Positionierung des Fasergitters in dem Fließpresswerkzeug, ohne dass weitere Haltevorrichtungen zum Halten des Fasergitters notwendig sind.

Erfindungsgemäß ist das Fließpresswerkzeug derart ausgebildet, dass dieses ein Werkzeugteil aufweist, welches entlang einer Pressrichtung des Stempels zwischen einer ersten Position und einer zweiten Position verstellbar ist. Ferner weist das Fließpresswerkzeug einen Kern auf, der entlang einer quer zur Pressrichtung verlaufenden Ausfahrrichtung zwischen einer ersten Stellung und einer zweiten Stellung verstellbar ist. Das Werkzeugteil weist eine Aufnahmeöffnung zum Aufnehmen des Kerns auf, wobei der Kern in dessen zweiter Stellung lediglich dann in die Aufnahmeöffnung des Werkzeugteils einführbar ist, wenn sich das Werkzeugteil in dessen zweiter Position befindet.

Das entsprechend ausgebildete Fließpresswerkzeug ermöglicht die Herstellung von geometrisch komplexen Fließpressteilen, beispielsweise von Batteriegehäuseschalen, die Durchgangsöffnungen an beliebigen Positionen aufweisen. Bei beispielsweise mehrere winklig zueinander angeordneten Wandabschnitten des Fließpressteils kann die Durchgangsöffnung bzw. die Durchgangsöffnungen an einem beliebigen der Wandabschnitte eingebracht werden, so dass komplexe Fließpressteile mit beliebig angeordneten Durchgangsöffnungen werkzeugfallend hergestellt werden können.

Weitere Vorteile, Einzelheiten und Merkmale der Erfindung ergeben sich nachfolgend aus den erläuterten Ausführungsbeispielen. Dabei zeigen im Einzelnen:
- Figur 1A:: eine Draufsicht auf eine einen Kern aufweisende Matrize eine Fließpresswerkzeugs mit einem eingelegten Plastifikat zu Beginn eines Herstellungsprozesses eines Fließpressteils, wobei ein Stempel des Fließpresswerkzeugs und ein Fasergitter des Fließpressteils nicht dargestellt sind;
- Figur 1B:: das in Figur 1A dargestellte Fließpresswerkzeug zu einem späteren Zeitpunkt des Herstellungsprozesses, bei dem der Kern von dem Plastifikat bereits umschlossen ist;
- Figur 1C:: das in den Figuren 1A und 1B dargestellte Fließpresswerkzeug am Ende des Herstellungsprozesses, bei dem das Fließpressteil fertiggestellt ist, wobei in Figur 1C ein Fasergitter in einem Verbindungsbereich des Fließpressteils dargestellt ist;
- Figur 2A:: eine Draufsicht auf eine mehrere Kerne aufweisende Matrize eines Fließpresswerkzeugs während eines Herstellungsprozesses eines Fließpressteils mit einem sich im Umformprozess befindlichen Plastifikat, wobei ein Fasergitter des Fließpressteils und ein Stempel der Fließpresswerkzeugs nicht dargestellt sind;
- Figur 2B:: das in Figur 2A dargestellte Fließpresswerkzeug zu einem späteren Zeitpunkt des Herstellungsprozesses des Fließpressteils, wobei abweichend zu Figur 2A das Fasergitter des Fließpressteils dargestellt ist;
- Figur 3A:: eine Draufsicht auf ein erfindungsgemäßes Fließpressteil mit einer Mehrzahl von Durchgangsöffnungen, wobei das Fasergitter des Fließpressteils nicht dargestellt ist;
- Figur 3B:: eine Schnittdarstellung des in Figur 3A dargestellten Fließpressteils entlang der in Figur 3A dargestellten Schnittebene A-A;
- Figur 4A:: eine Draufsicht auf ein Fließpresswerkzeug zum Herstellen eines aus zumindest zwei Plastifikaten hergestellten Fließpressteils;
- Figur 4B:: eine Schnittdarstellung des in Figur 4A dargestellten Fließpresswerkzeugs; und
- Figur 5:: eine Schnittdarstellung eines Fließpresswerkzeugs gemäß einer weiteren Ausführungsform der vorliegenden Erfindung.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

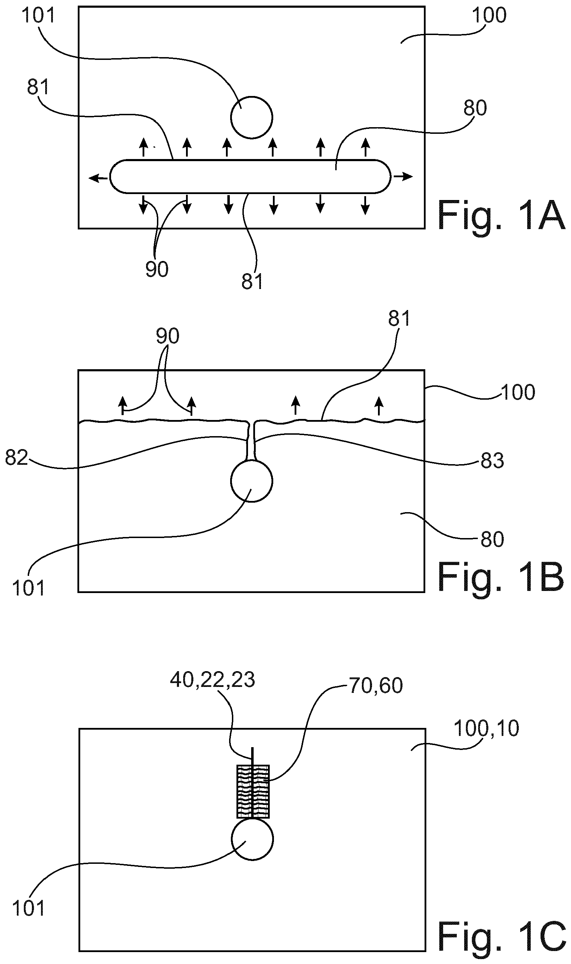

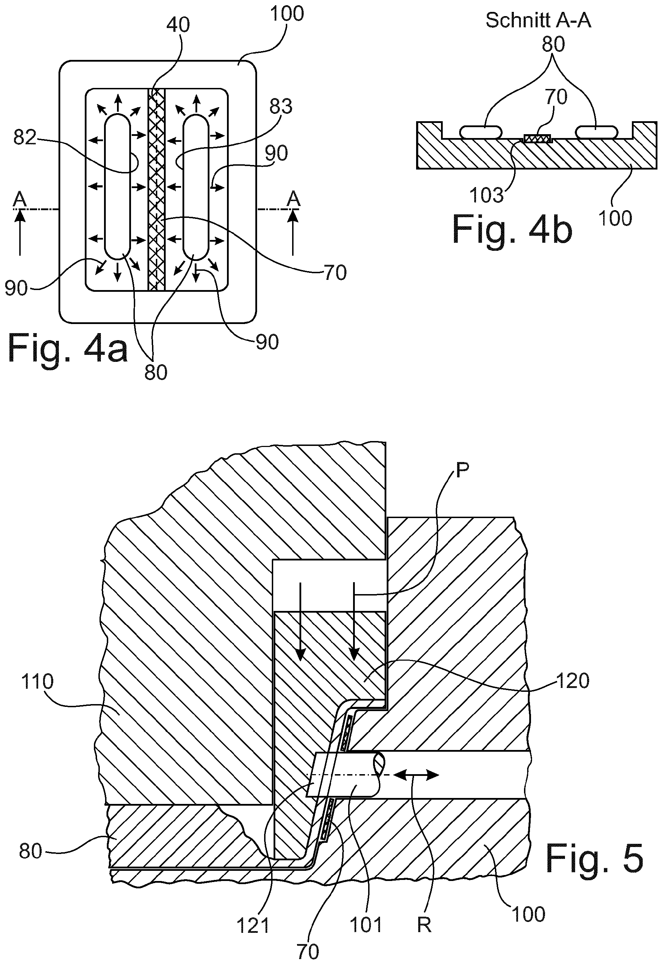

Figur 1A zeigt eine Draufsicht auf eine einen Kern 101 aufweisende Matrize 100 eines Fließpresswerkzeugs, wobei das Fließpresswerkzeug im Querschnitt in Figur 5 gezeigt ist. Wie aus Figur 1A zu ersehen ist, ist in die Matrize 101 ein Plastifikat 80 eingelegt, das mittels Druckbeaufschlagung mittels eines Stempels 110 des Fließpresswerkzeugs verformbar ist. Durch Druckbeaufschlagung des Plastifikats 80 mittels des Stempels 110 wird das Plastifikat 80 fließpressverformt, sodass sich Schmelzefronten 81 des Plastifikats 80 entlang der mit den Pfeilen 90 dargestellten Fließrichtungen ausbreiten. Der Kern 101 ragt aus einer Oberfläche der Matrize 100 hervor, sodass eine Schmelzefront 81 des Plastifikats 80 den Kern 101 Umfließen muss.

Aus Figur 1B ist das in Figur 1A dargestellte Fließpresswerkzeug zu einem späteren Zeitpunkt des Herstellungsprozesses des Fließpressteils 10 dargestellt, bei dem das Plastifikat 80 weiter verformt ist und das Plastifikat 80 den Kern 101 bereits umschlossen hat. Aufgrund des Umfließens des Kerns 101 durch das Plastifikat 80 bilden sich flussabwärts der Flussrichtung der Schmelzefront hinter dem Kern 101 zwei Schmelzefronten 82, 83 aus, die im weiteren Verlauf des Herstellungsprozesses des Fließpressteils 10 miteinander in Berührung kommen und somit verschweißt werden.

Dieser Zustand ist in Figur 1C dargestellt, bei dem der Fließpressprozess abgeschlossen ist. Es ist ersichtlich, dass die zwei Schmelzefronten 82, 83 miteinander verschweißt sind und jeweils Materialinnenkanten 22, 23 des Fließpressteils 10 bilden. Die Materialinnenkanten 22, 23 sind dabei miteinander verschweißt und bilden eine linienförmige Bindenaht 40. Aus Figur 1C ist ersichtlich, dass in einem Verbindungsbereich 60 des Fließpressteils 10 ein Fasergitter 70 angeordnet ist, wobei Fasern des Fasergitters 70 die Materialinnenkanten 22, 23 überbrücken. Dies bedeutet, dass sich jeweilige Fasern des Fasergitters 70 quer zu Erstreckungsrichtung der Bindenaht 40 erstrecken.

Folglich wird durch das Verfahren zum Herstellen eines Fließpressteils 10 mittels eines Fließpresswerkzeugs ein Fließpressteil 10 mit erhöhter Stabilität erzeugt. Das Verfahren umfasst dabei einen Verfahrensschritt des Platzierens von zumindest einem Plastifikat 80 in der Matrize 100 des sich in einer Offenstellung befindlichen Fließpresswerkzeugs. Ferner wird ein Fasergitter 70 in dem Fließpresswerkzeug platziert. Durch Schließen des Fließpresswerkzeugs, sodass der Stempel 110 des Fließpresswerkzeugs mit dem Plastifikat 80 in Kontakt kommt, wird das Plastifikat 80 durch Druckbeaufschlagung mittels des Stempels 110 umgeformt, sodass das Fasergitter 70 von den zwei Schmelzefronten 82, 83 des Plastifikats 80 von zwei Seiten eingefasst und mit dem Plastifikat 80 verbunden wird.

Durch diesen Herstellungsprozess wird ein Fließpressteil 10 durch Verformung von zumindest einem Plastifikat 80 erzeugt. Zwei Schmelzefronten 82, 83 des Plastifikats 80 bilden im erstarrten Zustand des Plastifikats 80 die zwei Materialinnenkanten 22, 23 des Fließpressteils 10. Die Materialinnenkanten 22, 23 sind miteinander stoffschlüssig verbunden, indem diese miteinander verschweißt sind, und die Materialinnenkanten 22, 23 definieren die linienförmige Bindenaht 40 des Fließpressteils 10. Die Bindenaht 40 ist in einem Verbindungsbereich 60 des Fließpressteils 10 angeordnet, wobei der Verbindungsbereich 60 die unmittelbare Nachbarschaft der Materialinnenkanten 22, 23 umfasst. Das Fließpressteil 10 weist das Fasergitter 70 auf, wobei das Fließpressteil 10 auch eine Vielzahl von Fasergitter 70 aufweisen kann. Das Fasergitter 70 ist in dem Verbindungsbereich 60 des Fließpressteils 10 angeordnet und dabei mit dem Fließpressteil derart verbunden, dass das Fasergitter 70 die zwei Materialinnenkanten 22, 23 überbrückt. Das Fasergitter 70 könnte sich jedoch auch über die gesamte Fläche des Fließpressteils 10 erstrecken. Dabei verlaufen einzelne Fasern des Fasergitters 70 quer zu Erstreckungsrichtung der Bindenaht 40, sodass die einzelnen Fasern des Fasergitters 70 die zwei Materialinnenkanten 22, 23 überbrücken.

Das Fließpressteil 10 ist vorzugsweise als eine Batteriegehäuseschale 10 ausgebildet. Das Fasergitter 70 kann vorzugsweise an einer Innenfläche des Fließpressteils 10 grenzen. Ferner ist es möglich, dass das Fasergitter 70 an einer Außenfläche des Fließpressteils 10 angrenzt. Zur weiteren Erhöhung der Stabilität des Fließpressteils 10 können auch zwei Fasergitter 70 vorgesehen sein, die auf zwei Seiten des Fließpressteils 10 angeordnet sind, wobei ein Fasergitter an einer Innenfläche des Fließpressteils 10 grenzt, und wobei ein weiteres Fasergitter 70 an einer Außenfläche des Fließpressteils 10 grenzt.

Das Fasergitter 70 kann dergestalt ausgebildet sein, dass das Fasermaterial in einer Materialmatrix eingebettet ist, wobei das Matrixmaterial mit dem Plastifikat 80 bzw. mit den Plastifikaten 80 stoffschlüssig verbunden ist.

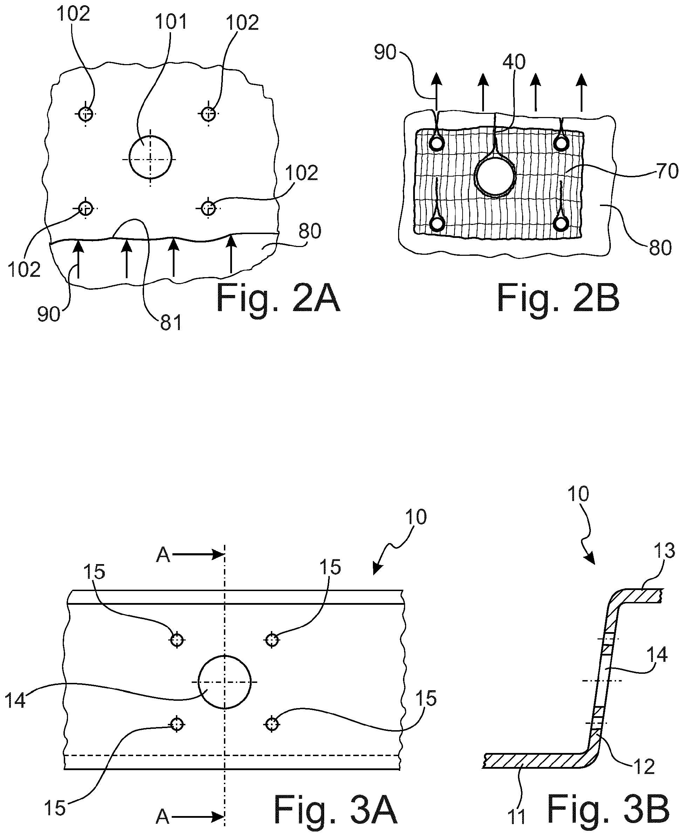

In den Figuren 2A und 2B wird der Herstellungsprozess eines weiteren Fließpressteils 10 schematisch dargestellt. Figur 2A zeigt dabei eine Draufsicht auf eine mehrere Kerne 101, 102 aufweisende Matrize 100 eines Fließpresswerkzeugs während eines Herstellungsprozesses eines Fließpressteils 10 mit einem sich im Umformprozess befindlichen Plastifikat 80. Dabei ist in Figur 2A weder ein Fasergitter 70 des Fließpressteils 10 noch ein Stempel 110 des Fließpresswerkzeugs dargestellt. Diese sind jedoch in Figur 2B dargestellt.

Es ist ersichtlich, dass das Fließpresswerkzeug fünf Kerne 101, 102 aufweist. Ein erster Kern 101 weist dabei einen größeren Durchmesser als die vier weiteren Kerne 102 auf. In Figur 2A ist das Fließpresswerkzeug zu einem früheren Zeitpunkt des Fließpressprozesses als in Figur 2B dargestellt. Es ist ersichtlich, dass in dem Zustand von Figur 2A die Schmelzefront 81 des Plastifikats 80 noch von den Kernen 101, 102 entfernt ist. Mit fortschreitendem Fließpressprozess umschließt das Plastifikat 80 die Kerne 101, 102, sodass sich stromabwärts der jeweiligen Kerne 101, 102 jeweilige Schmelzefronten 82, 83 des Plastifikats 80 miteinander verbinden und Materialinnenkanten 22, 23 des Fließpressteils 10 bilden. Aus Figur 2B ist ersichtlich, dass das Fasergitter 70 eine solche Dimensionierung aufweist, dass das Fasergitter 70 den gesamten Bereich des Fließpressteils 10 abdeckt, in dem Durchgangsbohrungen 14 in dem Fließpressteil 10 gebildet werden sollen.

Aus den Figuren 3A und 3B ist das so erzeugte Fließpressteil 10 dargestellt, wobei in Figur 10 das Fließpressteil in einer Draufsicht dargestellt ist, und wobei in Figur 3B das in Figur 3A dargestellte Fließpressteil 10 entlang des Schnitts A-A dargestellt ist. Das Fließpressteil 10 weist drei Wandschnitte auf, nämlich einen ersten Wandabschnitt 11, ein zweiten Wandabschnitt 12 und einen dritten Wandabschnitt 13. Die Wandabschnitte 11, 12, 13 sind winklig zueinander angeordnet. Es ist ersichtlich, dass in dem zweiten Wandabschnitt 12 ein Durchgangsloch 14 gebildet ist, dass durch Umfließen des Kerns 101 gebildet ist. Die weiteren Löcher, die durch Umfließen der Kerne 102 durch das Plastifikat 80 erzeugt sind, sind in Figur 3B nicht zu ersehen.

In den Figuren 4A und 4B ist ein weiteres Fließpresswerkzeug zum Herstellen eines Fließpressteils 10 dargestellt. Dabei ist in Figur 4A das Fließpresswerkzeug in Draufsicht gezeigt, und in Figur 4B ist eine Schnittdarstellung des in Figur 4A dargestellten Fließpresswerkzeugs entlang der Schnittebene A-A gezeigt. Es ist ersichtlich, dass zwei Plastifikate 80 in die Matrize 100 des Fließpresswerkzeugs eingelegte sind. Zwischen den zwei Plastifikaten 80 ist ein Fasergitter 70 angeordnet, sodass durch Verformung der zwei Plastifikate 80 eine erste Schmelzefront 82 mit einer zweiten Schmelzefront 83 im Bereich des Fasergitters 70 miteinander in Kontakt kommen. Die miteinander stoffschlüssig verbundenen Schmelzefronten 82, 83 bilden dann Materialinnenkanten 22, 23 des fertigen Fließpressteils 10, die wiederum die Bindenaht 40 des Fließpressteils bilden.

Aus Figur 4B ist ersichtlich, dass die Matrize 100 eine Aufnahmeeinrichtung 103 in Form einer Vertiefung 103 aufweist, in die das Fasergitter 70 eingelegt ist. Somit verbleibt das Fasergitter 70 während des Herstellungsprozesses des Fließpressteils 10 ortsstabil in der Matrize 100.

Figur 5 zeigt ein Fließpresswerkzeug in Schnittdarstellung. Wie bereits oben ausgeführt, weist das Fließpresswerkzeug eine Matrize 100 und einen Stempel 110 auf. Das zwischen der Matrize 100 und dem Stempel 110 angeordnete Plastifikat 80 wird durch Herunterdrücken des Stempels 110 entlang einer Pressrichtung P verformt. Aus Figur 5 ist ersichtlich, dass das Fließpresswerkzeug ein Werkzeugteil 120 aufweist, welches entlang der Pressrichtung P des Stempels 110 zwischen einer ersten Position und einer zweiten Position verstellbar ist. Es ist ferner ersichtlich, dass in der Matrize 101 ein verfahrbarer Kern 101 angeordnet ist, der entlang einer quer zur Pressrichtung P verlaufenden Ausfahrrichtung R zwischen einer ersten Stellung und einer zweiten Stellung verstellbar ist. Bei dem in Figur 5 dargestellten Fließpresswerkzeug befindet sich der Kern 101 in dessen zweiten Stellung, und das Werkzeugteil 120 befindet sich in dessen zweiter Position. Das Werkzeugteil 120 weist eine Aufnahmeöffnung 121 zum Aufnehmen des Kerns 101 auf, wobei der Kern 101 in dessen zweiter Stellung lediglich dann in die Aufnahmeöffnung 121 des Werkzeugteils 120 einführbar ist, wenn sich das Werkzeugteil 120 in dessen zweiter Position befindet.

### Bezugszeichenliste

- 10: Fließpressteil / Batteriegehäuseschale
- 11: erste Wand (des Fließpressteils)
- 12: zweite Wand (des Fließpressteils)
- 13: dritte Wand (des Fließpressteils)
- 14, 15: Durchgangsloch
- 22, 23: Materialinnenkante (des Fließpressteils)
- 40: Bindenaht (des Fließpressteils)
- 50: Durchgangsöffnung (des Fließpressteils)
- 60: Verbindungsbereich (des Fließpressteils)
- 70: Fasergitter (des Fließpressteils)

- 80: Plastifikat
- 81, 82, 83: Schmelzefront (des Plastifikats / der Plastifikate)
- 90: Fließrichtung (des Plastifikats / der Plastifikate)

- 100: Matrize / Pressform
- 101, 102: Kern (der Matrize)
- 103: Aufnahmeeinrichtung / Vertiefung (der Matrize)
- 110: Stempel
- 120: Werkzeugteil
- 121: Aufnahmeöffnung (des Werkzeugteils)

- P: Pressrichtung
- R: Ausfahrrichtung des Kerns

## Patentansprüche

1. Fließpressteil (10) mit den folgenden Merkmalen:
- das Fließpressteil (10) ist durch Fließpressen von zumindest einem Plastifikat (80) gebildet, wobei das Plastifikat (80) / die Plastifikate (80) zwei Schmelzefronten (82, 83) aufweist / aufweisen, die im erstarrten Zustand des Plastifikats (80) / der Plastifikate (80) zwei Materialinnenkanten (22, 23) des Fließpressteils (10) bilden;
- die zwei Materialinnenkanten (22, 23) sind stoffschlüssig miteinander verbunden und definieren eine linienförmige Bindenaht (40) des Fließpressteils (10), wobei die Bindenaht (40) in einem Verbindungsbereich (60) des Fließpressteils (10) angeordnet ist; und
- das Fließpressteil (10) weist zumindest ein Fasergitter (70) auf, das zumindest im Verbindungsbereich (60) des Fließpressteils (10) angeordnet und mit dem Fließpressteil (10) derart verbunden ist, dass das Fasergitter (70) die zwei Materialinnenkanten (22, 23) überbrückt.

2. Fließpressteil (10) nach Anspruch 1, **dadurch gekennzeichnet, dass** zumindest 50% der Fasern des Fasergitters (70) eine Längserstreckung aufweisen, die quer zur Bindenaht (40) verläuft und mit der Bindenaht (40) einen Winkel zwischen 45° und 90° einschließt.

3. Fließpressteil (10) nach einem der vorhergehenden Ansprüche, **dadurch gekennzeichnet, dass** das zumindest eine Fasergitter (70) an einer Innenfläche des Fließpressteils (10) grenzt.

4. Fließpressteil (10) nach einem der vorhergehenden Ansprüche, **dadurch gekennzeichnet, dass** das zumindest eine Fasergitter (70) an einer Außenfläche des Fließpressteils (10) grenzt.

5. Fließpressteil (10) nach einem der vorhergehenden Ansprüche, **dadurch gekennzeichnet, dass** das Fasergitter (70) in einem Matrixmaterial eingebettet ist, wobei das Matrixmaterial mit dem Plastifikat (80) / den Plastifikaten (80) stoffschlüssig verbunden ist.

6. Batteriegehäuse für eine Traktionsbatterie, wobei das Batteriegehäuse zumindest ein Fließpressteil (10) nach einem der vorhergehenden Ansprüche aufweist.

7. Traktionsbatterie für ein Kraftfahrzeug, wobei die Traktionsbatterie ein Batteriegehäuse nach Anspruch 6 aufweist, wobei zumindest ein Batteriemodul im Innenraum des Batteriegehäuses aufgenommen ist.

8. Verfahren zum Herstellen eines Fließpressteils (10) mittels eines Fließpresswerkzeugs, wobei das Verfahren die folgenden Verfahrensschritte aufweist:
- Platzieren von zumindest einem Plastifikat (80) in einer Matrize (100) des sich in Offenstellung befindlichen Fließpresswerkzeugs;
- Platzieren eines Fasergitters (70) in dem Fließpresswerkzeug;
- Schließen des Fließpresswerkzeugs, so dass ein Stempel (110) des Fließpresswerkzeugs mit dem zumindest einen Plastifikat (80) in Kontakt kommt und das Plastifikat (80) durch Druckaufbringung mittels des Stempels (110) umgeformt wird und das Fasergitter (70) von zwei Schmelzefronten (82, 83) des zumindest einen Plastifikats (80) von zwei Seiten eingefasst und mit dem Plastifikat (80) verbunden wird.

9. Verfahren nach Anspruch 8, **dadurch gekennzeichnet, dass** das Fasergitter (70) derart in dem Fließpresswerkzeug platziert ist, dass das Fasergitter (70) in unmittelbarer Nachbarschaft eines Kerns (101, 102) der Matrize (100) angeordnet ist, so dass der Kern (101, 102) zwischen dem Plastifikat (80) und dem Fasergitter (70) angeordnet ist.

10. Verfahren nach Anspruch 8 oder 9, **gekennzeichnet durch** die folgenden Merkmale:
- Platzieren von zwei Plastifikaten (80) in der Matrize (100) des sich in Offenstellung befindlichen Fließpresswerkzeugs;
- Platzieren des Fasergitters (70) zwischen den zwei Plastifikaten (80);
- Schließen des Fließpresswerkzeugs, so dass der Stempel (110) des Fließpresswerkzeugs mit den zwei Plastifikaten (80) in Kontakt kommt und die Plastifikate (80) durch Druckaufbringung mittels des Stempels (110) umgeformt werden und das Fasergitter (70) von einer ersten Schmelzefront (82) des ersten Plastifikats (80) und einer zweiten Schmelzefront (23) des zweiten Plastifikats (80) eingefasst und mit den Plastifikaten (80) verbunden wird.

11. Fließpresswerkzeug zum Herstellen eines Fließpressteils (10) für eine Traktionsbatterie, wobei das Fließpresswerkzeug eine Matrize (100) und einen Stempel (110) aufweist, wobei die Matrize (100) eine Aufnahmeeinrichtung (103) zum Aufnehmen eines Fasergitters (70) aufweist, wobei das Fließpresswerkzeug durch folgende Merkmale **gekennzeichnet** ist:
- das Fließpresswerkzeug weist ein Werkzeugteil (120) auf, welches entlang einer Pressrichtung (P) des Stempels (110) zwischen einer ersten Position und einer zweiten Position verstellbar ist;
- das Fließpresswerkzeug weist zumindest einen Kern (101, 102) auf, der entlang einer quer zur Pressrichtung (P) verlaufenden Ausfahrrichtung (R) zwischen einer ersten Stellung und einer zweiten Stellung verstellbar ist;
- das Werkzeugteil (120) weist zumindest eine Aufnahmeöffnung (121) zum Aufnehmen des Kerns (101, 102) auf, wobei der Kern (101, 102) in dessen zweiter Stellung lediglich dann in die Aufnahmeöffnung (121) des Werkzeugteils (120) einführbar ist, wenn sich das Werkzeugteil (120) in dessen zweiter Position befindet.

12. Fließpresswerkzeug nach Anspruch 11, **dadurch gekennzeichnet, dass** die Aufnahmeeinrichtung (103) als Vertiefung (103) in der Matrize (100) ausgebildet ist.

## Claims

1. Extruded part (10) with the following features:
- the extruded part (10) is formed by extrusion of at least one plasticate (80), wherein the plasticate (80) / the plasticates (80) has / have two melt fronts (82, 83) which, in the solidified state of the plasticate (80) / the plasticates (80), form two material inner edges (22, 23) of the extruded part (10);
- the two material inner edges (22, 23) are integrally connected to one another and define a linear bonding seam (40) of the extruded part (10), wherein the bonding seam (40) is arranged in a connecting region (60) of the extruded part (10); and
- the extruded part (10) has at least one fibre grid (70), which is arranged at least in the connecting region (60) of the extruded part (10) and is connected to the extruded part (10) in such a way that the fibre grid (70) bridges the two material inner edges (22, 23).

2. Extruded part (10) according to Claim 1, **characterized in that** at least 50% of the fibres of the fibre grid (70) have a longitudinal extension that runs transversely to the bonding seam (40) and encloses an angle of between 45° and 90° with the bonding seam (40).

3. Extruded part (10) according to any of the preceding claims, **characterized in that** the at least one fibre grid (70) adjoins an inner surface of the extruded part (10).

4. Extruded part (10) according to any of the preceding claims, **characterized in that** the at least one fibre grid (70) adjoins an outer surface of the extruded part (10).

5. Extruded part (10) according to any of the preceding claims, **characterized in that** the fibre grid (70) is embedded in a matrix material, wherein the matrix material is integrally bonded to the plasticate (80) / the plasticates (80).

6. Battery housing for a traction battery, wherein the battery housing comprises at least one extruded part (10) according to any of the preceding claims.

7. Traction battery for a motor vehicle, wherein the traction battery comprising a battery housing according to Claim 6, wherein at least one battery module is accommodated in the interior of the battery housing.

8. Method for manufacturing an extruded part (10) by means of an extrusion tool, wherein the method comprises the following method steps:
- Placing at least one plasticate (80) in a die (100) of the extrusion tool in the open position;
- Placing a fibre grid (70) in the extrusion tool;
- Closing the extrusion tool, so that a punch (110) of the extrusion tool comes into contact with the at least one plasticate (80) and the plasticate (80) is deformed by pressure application by means of the punch (110), and the fibre grid (70) is enclosed by two melt fronts (82, 83) of the at least one plasticate (80) from two sides and connected to the plasticate (80).

9. Method according to Claim 8, **characterized in that** the fibre grid (70) is placed in the extrusion tool such that the fibre grid (70) is arranged in the immediate vicinity of a core (101, 102) of the die (100), such that the core (101, 102) is arranged between the plasticate (80) and the fibre grid (70).

10. Method according to Claim 8 or 9, **characterized by** the following features:
- Placing two plasticates (80) in the die (100) of the extrusion tool in the open position;
- Placing the fibre grid (70) between the two plasticates (80);
- Closing the extrusion tool so that the punch (110) of the extrusion tool comes into contact with the two plasticates (80) and the plasticates (80) are deformed by pressure application by means of the punch (110) and the fibre grid (70) is enclosed by a first melt front (82) of the first plasticate (80) and a second melt front (23) of the second plasticate (80) and connected to the plasticates (80).

11. Extrusion tool for producing an extruded part (10) for a traction battery, wherein the extrusion tool comprises a die (100) and a punch (110), wherein the die (100) comprises a receiving device (103) for receiving a fibre grid (70), wherein the extrusion tool is **characterized by** the following features:
- the extrusion tool has a tool part (120) that is adjustable between a first position and a second position along a pressing direction (P) of the punch (110);
- the extrusion tool has at least one core (101, 102), which is adjustable between a first position and a second position along an extension direction (R) running transversely to the pressing direction (P);
- the tool part (120) has at least one receiving opening (121) for receiving the core (101, 102), wherein the core (101, 102) in its second position can only be inserted into the receiving opening (121) of the tool part (120) when the tool part (120) is in its second position.

12. Extrusion tool according to Claim 11, **characterized in that** the receiving device (103) is configured as a recess (103) in the die (100).

## Revendications

1. Pièce extrudée (10) présentant les caractéristiques suivantes :
- la pièce extrudée (10) est formée par extrusion d'au moins un plastificat (80), le/les plastificat(s) (80) présentant deux faces de fusion (82, 83) qui, à l'état solidifié du/des plastificat(s) (80), forment deux bords intérieurs du matériau (22, 23) de la pièce extrudée (10) ;
- les deux bords intérieurs du matériau (22, 23) sont reliés l'un à l'autre par liaison du matériau et définissent une couture de liaison (40) linéaire de la pièce extrudée (10), la couture de liaison (40) étant disposée dans une zone de liaison (60) de la pièce extrudée (10) ; et
- la pièce extrudée (10) présente au moins une grille fibreuse (70) qui est disposée au moins dans la zone de liaison (60) de la pièce extrudée (10) et qui est reliée à la pièce extrudée (10) de telle sorte que la grille fibreuse (70) enjambe les deux bords intérieurs du matériau (22, 23).

2. Pièce extrudée (10) selon la revendication 1, **caractérisée en ce qu'**au moins 50 % des fibres de la grille fibreuse (70) présentent une extension longitudinale qui s'étend transversalement à la couture de liaison (40) et forme un angle compris entre 45° et 90° avec la couture de liaison (40).

3. Pièce extrudée (10) selon l'une quelconque des revendications précédentes, **caractérisée en ce que** le au moins une grille fibreuse (70) est adjacent à une surface intérieure de la pièce extrudée (10).

4. Pièce extrudée (10) selon l'une quelconque des revendications précédentes, **caractérisée en ce que** le au moins une grille fibreuse (70) est adjacent à une surface extérieure de la pièce extrudée (10).

5. Pièce extrudée (10) selon l'une quelconque des revendications précédentes, **caractérisée en ce que** la grille fibreuse (70) est noyé dans un matériau de matrice, le matériau de matrice étant lié par liaison du matériau au/aux plastificat(s) (80).

6. Boîtier de batterie pour une batterie de traction, dans lequel le boîtier de batterie comprend au moins une pièce extrudée (10) selon l'une quelconque des revendications précédentes.

7. Batterie de traction pour un véhicule automobile, la batterie de traction comprenant un boîtier de batterie selon la revendication 6, au moins un module de batterie étant logé à l'intérieur du boîtier de batterie.

8. Procédé de fabrication d'une pièce extrudée (10) à l'aide d'un outil d'extrusion, le procédé comportant les étapes de procédé suivantes :
- placer au moins un plastificat (80) dans une matrice (100) de l'outil d'extrusion en position ouverte ;
- placer une grille fibreuse (70) dans l'outil d'extrusion ;
- fermer l'outil d'extrusion de sorte qu'un poinçon (110) de l'outil d'extrusion entre en contact avec le au moins un plastificat (80) et que le plastificat (80) soit formé par application sous pression au moyen du poinçon (110) et que la grille fibreuse (70) soit bordée de deux côtés par deux faces de fusion (82, 83) du au moins un plastificat (80) et relié au plastificat (80).

9. Procédé selon la revendication 8, **caractérisé en ce que** la grille fibreuse (70) est placée dans l'outil d'extrusion de telle sorte que la grille fibreuse (70) est disposée au voisinage immédiat d'un noyau (101, 102) de la matrice (100) de telle sorte que le noyau (101, 102) est disposé entre le plastificat (80) et la grille fibreuse (70).

10. Procédé selon la revendication 8 ou 9, **caractérisé par** les caractéristiques suivantes :
- placer de deux plastifiants (80) dans la matrice (100) de l'outil d'extrusion en position ouverte ;
- placer la grille fibreuse (70) entre les deux plastifcats (80) ;
- fermer l'outil d'extrusion de sorte que le poinçon (110) de l'outil d'extrusion entre en contact avec les deux plastificats (80) et que les plastificats (80) soient transformés par application sous pression au moyen du poinçon (110) et que la grille fibreuse (70) soit bordée par une première face de fusion (82) du premier plastificat (80) et une deuxième face de fusion (23) du deuxième plastificat (80) et relié aux plastificats (80).

11. Outil d'extrusion pour fabriquer une pièce d'extrusion (10) pour une batterie de traction, l'outil d'extrusion comprenant une matrice (100) et un poinçon (110), la matrice (100) comprenant un dispositif de réception (103) pour recevoir une grille fibreuse (70), l'outil d'extrusion étant **caractérisé par** les caractéristiques suivantes :
- l'outil d'extrusion présente une partie d'outil (120) qui est réglable le long d'une direction de pressage (P) du poinçon (110) entre une première position et une deuxième position ;
- l'outil d'extrusion présente au moins un noyau (101, 102) réglable le long d'une direction de sortie (R) transversale à la direction de pressage (P) entre une première position et une deuxième position ;
- la partie d'outil (120) présente au moins une ouverture de réception (121) pour recevoir le noyau (101, 102), le noyau (101, 102) dans sa deuxième position ne pouvant être inséré dans l'ouverture de réception (121) de la partie d'outil (120) que lorsque la partie d'outil (120) se trouve dans sa deuxième position.

12. Outil d'extrusion selon la revendication 11, **caractérisé en ce que** le dispositif de réception (103) est réalisé sous la forme d'un renfoncement (103) dans la matrice (100).
